# EUROPÄISCHE PATENTSCHRIFT

(11) **EP 1 873 209 B1**
(45) Veröffentlichungstag und Bekanntmachung des Hinweises auf die Patenterteilung: **01.02.2012**
(21) Anmeldenummer: 07010662.0
(22) Anmeldetag: 30.05.2007
(51) Int. Cl.: C08L 75/00, C08J 9/00

(54) **Siliconstabilisatoren für flammgeschützte Polyurethan- bzw. Polyisocyanurat-Hartschaumstoffe**
Siliconstabilizers for flame retardant polyurethane- resp. polyioscyanurate rigid foams
Stabilisateurs à base de silicone pour des mousses rigides de polyuréthane- resp. polyisocyanurate

(30) Priorität: 01.07.2006 DE 102006030531
(43) Veröffentlichungstag der Anmeldung: 02.01.2008
(73) Patentinhaber: Evonik Goldschmidt GmbH, 45127 Essen (DE)
(72) Erfinder: Schiller, Carsten, Dr., 45470 Mülheim an der Ruhr (DE); Henning, Frauke, Dr., 45130 Essen (DE); Klincke, Manfred, 44581 Castrop-Rauxel (DE)

(56) Entgegenhaltungen:
- DE-C1- 3 338 106
- US-B1- 6 294 107

## Beschreibung

Gegenstand der Erfindung ist die Entwicklung von Polyurethan- bzw. Polyisocyanurat-Hartschaumstoffen und den ihnen zugrunde liegenden Formulierungen, welche besonders vorteilhafte Gebrauchseigenschaften, wie niedrige Wärmeleitfähigkeit und gute Oberflächenqualität, bieten.

Bei der Herstellung von Polyurethan- und Polyisocyanurat-Hartschaumstoffen werden zellstabilisierende Additive eingesetzt, welche für eine feinzellige, gleichmäßige und störungsarme Schaumstruktur sorgen und damit die Gebrauchseigenschaften, besonders das thermische Isolationsvermögen, des Hartschaumstoffes im wesentlichen Maße positiv beeinflussen. Besonders effektiv sind Tenside auf der Basis von Polyether-modifizierten Siloxanen, welche daher den bevorzugten Typ der Schaumstabilisatoren darstellen.

Da es eine Vielzahl verschiedener Hartschaumformulierungen für unterschiedliche Anwendungsgebiete gibt, die individuelle Anforderungen an den Schaumstabilisator stellen, werden Polyethersiloxane unterschiedlicher Struktur eingesetzt. Eines der Auswahlkriterien für den Schaumstabilisator ist dabei das in der Hartschaumformulierung enthaltene Treibmittel.

Verschiedene Veröffentlichungen bezüglich Polyethersiloxan-Schaumstabilisatoren für Hartschaum-Anwendungen wurden bereits publiziert. Die EP 0 570 174 B1 beschreibt ein Polyethersiloxan der Struktur (CH₃)₃SiO[SiO(CH₃)₂]ₓ [Si0 (CH₃) R] _{y}Si (CH₃) ₃, dessen Reste R aus einem über eine SiC-Bindung an das Siloxan geknüpften Polyethylenoxid bestehen, welches am anderen Kettenende durch eine C₁-C₆ Acylgruppe endverkappt ist. Dieser Schaumstabilisator eignet sich für die Herstellung von Polyurethan-Hartschäumen unter Verwendung von organischen Treibmitteln, insbesondere Fluorchlorkohlenwasserstoffen wie CFC-11.

Die nächste Generation der Fluorchlorkohlenwasserstofftreibmittel sind so genannte Hydrochlorfluorkohlenwasserstoffe, wie z. B. HCFC-123. Bei der Verwendung dieser Treibmittel für die Polyurethan-Hartschaum-Herstellung eignen sich laut EP 0 533 202 A1 Polyethersiloxane des Strukturtyps (CH₃) ₃SiO [SiO (CH₃) ₂] ₓ [SiO (CH₃) R] _{y}Si (CH₃) ₃. Die Reste R bestehen hier aus SiC-gebundenen Polyalkylenoxiden, die aus Propylenoxid und Ethylenoxid zusammengesetzt sind und am Kettenende eine Hydroxy-, Methoxy- oder Acyloxyfunktion aufweisen können. Der Mindestanteil an Ethylenoxid im Polyether beträgt dabei 25 Massenprozent.

Die EP 0 877 045 B1 beschreibt für dieses Herstellverfahren analoge Strukturen, die sich durch ein vergleichsweise höheres Molekulargewicht und durch die Kombination zweier Polyethersubstituenten an der Siloxankette von den erstgenannten Schaumstabilisatoren abheben.

Bei der Herstellung von Polyurethan-Hartschäumen mit reinen Fluorkohlenwasserstoffen, wie z. B. Freon, als Treibmittel können laut EP 0 293 125 B1 auch Mischungen unterschiedlicher Stabilisatoren verwendet werden, so zum Beispiel die Kombination eines rein organischen Tensids mit einem Polyethersiloxan.

Die neuere Entwicklung bei der Herstellung von Polyurethan-Hartschäumen besteht darin, ganz auf halogenierte Kohlenwasserstoffe als Treibmittel zu verzichten und stattdessen Kohlenwasserstoffe wie Pentan einzusetzen. So beschreibt die EP 1 544 235 die Herstellung von Polyurethanhartschäumen unter Verwendung von Kohlenwasserstoff-Treibmitteln und Polyethersiloxanen der bereits bekannten Struktur (CH₃) ₃SiO[SiO (CH₃) ₂] ₓ[SiO(CH₃) R] _{y}Si(CH₃) ₃ mit einer Mindestkettenlänge des Siloxans von 60 Monomereinheiten und unterschiedlichen Polyethersubstituenten R, deren Mischungsmolgewicht 450 bis 1000 g/mol beträgt und deren Ethylenoxidanteil bei 70 bis 100 mol % liegt.

Die DE 33 38 106 beschreibt ein Verfahren zur Herstellung von Polyurethanschäument in Gegenwart einem Stabilisator der Struktur: B(CH₃)₂SiO-[Si(CH₃)₂O-]ₐ[SiACH₃O-]_{b}-Si(CH₃)₂, worin die Substituenten und Indizes die folgende Bedeutung haben:
A Polyoxyalkylenblöcke A¹ oder A² der allgemeinen Formel -R²-O-(CₙH₂ₘO)_{y}-R¹, wobei R¹ ein Wasserstoff- oder Alkylrest mit 1 bis 4 Kohlenstoffatomen, R² eine Alkylengruppe ist, y eine ganze Zahl ist und m einen Wert von 2,0 bis 2,6 hat, mit der Bedingung, dass:
   a. Die Blöcke A¹ aus 70 bis 100% Gew.-% Oxyethylen-, Rest Oxyproppyleneinheiten bestehen und ein Molekulargewicht von 200 bis 800 aufweisen,
   b. die Blöcke A² aus bis 35 bis 65 Gew.-% Oxyethylen-, Rest Oxypropyleneinheiten bestehen und ein Molekulargewicht von 600 bis 1500 aufweisen.
   c. das Molverhältnis der Blöcke A¹ zu den Blöcken A¹ 85:15 bis 15:85 beträgt,
B ein Methylrest oder ein Polyoxyalkylenblock A¹ oder A² ist,
   a einen Wert von 15 bis 150 und
   b wenn B gleich A¹ oder A² ist, einen Wert von 3 bis 18 hat.

Die in diesen Schriften beschriebenen Schaumstabilisatoren decken jedoch nicht die volle Bandbreite der verschiedenen Hartschaumstoff-Typen ab und in vielen Einsatzgebieten sind Verbesserungen der Schaumstabilisatoren gegenüber dem Stand der Technik wünschenswert, um die Gebrauchseigenschaften der Hartschaumstoffe weiter zu optimieren, insbesondere hinsichtlich der Wärmeleitfähigkeit, der Schaumdefekte an der Oberfläche und des Brandverhaltens der Schaumstoffe.

Ein wichtiges Einsatzgebiet für Polyurethan- bzw. Polyisocyanurat-Hartschaumstoffe stellen Dämmplatten mit flexiblen Deckschichten (wie z.B. Aluminium beschichtetes Papier) dar, welche zur Wärmedämmung beim Bau von Häusern und Gebäuden eingesetzt werden. Daneben gibt es auch Verbundelemente, bestehend aus einem Hartschaum-Kern und festen metallischen Deckschichten (z.B. Stahlblech), welche als Konstruktionselemente ebenfalls im Bausektor eingesetzt werden.

Beide Anwendungen fallen in den Bereich der Baustoffe, für den der Gesetzgeber Auflagen hinsichtlich des Brandschutzes macht. Die dabei verwendeten Klassifizierungskonzepte zur Beschreibung des Brandverhaltens von Baustoffen und Bauteilen basieren auf Normenreihen wie die DIN 4102 oder DIN EN 13501-1.

Mit Hilfe der darin definierten Brandprüfungen ist es möglich, brandschutztechnische Begriffe zu konkretisieren und Baustoffe in verschiedene Brandklassen einzuteilen. So können Baustoffe entsprechend der DIN 4102 in die Klassen A (nichtbrennbar) und B (brennbar) mit den Unterklassen B1 (schwerentflammbar), B2 (normalentflammbar) oder B3 (leichtentflammbar) eingestuft werden, wenn sie die jeweiligen Brandprüfverfahren bestehen.

Dämmplatten mit flexibler oder metallischer Deckschicht erreichen so die Brandklasse B2, wenn sie den Prüfkriterien des in der DIN 4102 beschriebenen Kleinbrennertests genügen, während für eine Einstufung in die Klasse B1 ein Bestehen des Brandschachtes erforderlich ist.

Zum Erreichen der Klasse B2 ist es in der Regel erforderlich, Polyurethan- bzw. Polyisocyanurat-Hartschaum durch Zugabe von Flammschutzmitteln flammhemmend auszurüsten. Besonders gebräuchliche Flammschutzmittel für Hartschaumstoffe sind flüssige organische Phosphate und Phosphonate, z.B. Tris(1-chlor-2-propyl)phosphat (TCPP), Triethylphosphat (TEP), Diethylethanphosphosphonat (DEEP) oder Dimethylpropanphosphonat (DMPP). Diese Flammschutzmittel wirken sich jedoch, besonders bei hohen Gehalten, negativ auf die physikalischen Eigenschaften des Schaumstoffes aus, insbesondere auf die Wärmeleitfähigkeit und die Stauchhärte.

Es besteht also die Aufgabe, die geforderten Brandeigenschaften mit möglichst geringen Mengen an Flammschutzmittel zu erreichen.

Überraschenderweise hat auch der Schaumstabilisator einen signifikanten Einfluss auf das Brandverhalten. Variiert man den Stabilisator unter Beibehaltung eines konstanten Flammschutzmittel-Anteils einer Formulierung, so können sich die Flammhöhen im Kleinbrenner-Test nach DIN 4102 um mehrere Zentimeter unterscheiden. Entsprechend würde zum Erreichen einer bestimmten Brandklasse je nach eingesetztem Stabilisator unterschiedlich viel Flammschutzmittel benötigt. Burkhart, G., et al., Proceedings of the UTECH 1996 Conference, Paper 58, beschreibt die Entwicklung von Silicon-Schaumstabilisatoren, mit welchen besonders gute Werte beim Test nach DIN 4102 erreicht werden.

Typische Vertreter der Silikon-Schaumstabilisatoren mit positivem Einfluss auf das Brandverhalten sind beispielsweise DC 193 von Air Products oder Tegostab^{®} B 8450 und Tegostab^{®} B 8486 der Fa. Goldschmidt GmbH.

Der Einsatz dieser Produkte zur Herstellung von flammgeschütztem Hartschaum ist Stand der Technik.

Diese hinsichtlich des Brandverhaltens optimierten Produkte sind aber bezüglich ihrer Wirkung als Schaumstabilisator den klassischen Silicon-Schaumstabilisatoren unterlegen, d.h. die Wärmeleitfähigkeit des Hartschaumstoffes zeigt höhere Werte als mit den klassischen Produkten und es treten unter kritischen Bedingungen - beispielsweise bei der Beschäumung von lackierten Blechen - verstärkt Schaumstörungen, wie Hohlräume oder Verdichtungen, an der Schaumoberfläche auf.

Bei der Herstellung von Hartschaumstoffen, die eine bestimmte Brandklasse erreichen, hat man folglich die Wahl zwischen zwei Alternativen: entweder man verwendet einen klassischen, hoch-aktiven Schaumstabilisator, benötigt dann aber einen höheren Gehalt an Flammschutzmitteln, was neben einem kommerziellen Nachteil auch zu gewissen Einbußen bei den gewünschten Schaumeigenschaften führt, oder man wählt einen hinsichtlich des Brandverhaltens optimierten Stabilisator, der eine geringere Aktivität besitzt und somit wiederum nicht die optimalen Schaumeigenschaften ermöglicht.

Eine Aufgabe der Erfindung war die Entwicklung von Polyurethan- bzw. Polyisocyanurat-Hartschaumstoffen und den ihnen zugrunde liegenden Formulierungen, welche besonders vorteilhafte Gebrauchseigenschaften, wie niedrige Wärmeleitfähigkeit und gute Oberflächenqualität, bieten. Weiterhin war es Aufgabe, flammgeschützte Polyurethan- bzw. Polyisocyanurat-Hartschaumstoffe zu entwickeln, die eine geforderte Brandklasse (z.B. B2) mit einer vergleichsweise geringen Menge an Flammschutzmittel erreichen. Der besondere Schwerpunkt lag auf der Kombination von guten Gebrauchseigenschaften und Flammschutz in einem Polyurethan- bzw. Polyisocyanurat-Hartschaumstoff.

Eine weitere Aufgabe war es, Polyurethan- bzw. Polyisocyanurat-Hartschaumstoff-Verbundelemente, insbesondere im Verbund mit metallischen Werkstoffen, zu entwickeln, die ausreichenden Flammschutz und gleichzeitig vorteilhafte Gebrauchseigenschaften, wie niedrige Wärmeleitfähigkeit und gute Oberflächenqualität, bieten.

Überraschenderweise wurde nun gefunden, dass Polyethersiloxan-Schaumstabilisatoren eines bestimmten Strukturtyps, dessen wesentliches Merkmal die sogenannte α,ω-Substitution (= Polyethersubstituenten am Kettenende des Siloxans) darstellt, diese im Widerspruch zueinander stehenden Performance-Ziele der hohen Aktivität und der Förderung flammhemmender Eigenschaften nicht nur miteinander vereinen, sondern sogar einen synergistischen Effekt in Kombination mit ausgewählten Flammschutzmitteln zeigen.

Ein Gegenstand der Erfindung ist daher ein Verfahren zur Herstellung von Polyurethan- oder Polyisocyanurat-Hartschaumstoffen durch Umsetzung eines Isocyanates mit einem Polyol in Gegenwart von Schaumstabilisatoren, Urethan- und/oder Isocyanurat-Katalysatoren, Wasser, optional weiteren Treibmitteln, optional Flammschutzmitteln und optional weiteren Additiven (wie Füllstoffen, Emulgatoren, rein organischen Stabilisatoren und Tensiden, Viskositätssenkern, Farbstoffen, Antioxidantien, UV-Stabilisatoren, Antistatika), dadurch gekennzeichnet, dass als Schaumstabilisatoren eine oder mehrere Verbindungen der allgemeinen Formel (I)

R-Si(CH₃)₂-O- [-Si(CH₃)₂-O-]ₙ-[-Si(CH₃)R¹-O-]ₘ-Si(CH₃)₂-R²

verwendet werden, worin die Substituenten und Indices die folgende Bedeutung haben
- R, R¹, R² gleich oder verschieden: = -(CH₂)ₓ-O- (CH₂-CHR'-O) _{y}-R"
- n+m+2: = 10 bis 45, vorzugsweise 10 bis 40,
- m: = 0 bis 2,
- x: = 3 bis 10, vorzugsweise 3,
- y: = 1 bis 19,vorzugsweise 5 bis 19,
- R': = H, -CH₃, -CH₂CH₃, Phenyl-Reste, vorzugsweise mit mind. 50 % der R'= H, besonders bevorzugt mit mind. 90 % der R'= H
- R": = H, Alkyl-, Acyl-Reste, vorzugsweise H, CH₃, COCH₃, besonders bevorzugt ist R" = H
Erfindungswesentlich für die erfindungsgemäßen Polyethersiloxan-Schaumstabilisatoren ist, dass sich Polyethersubstituenten an den beiden Kettenenden der Siloxankette befinden (α,ω-Substitution). Zusätzlich kann auch eine beschränkte Anzahl von Polyethersubstituenten an den Siliciumatomen im Inneren der Siloxankette vorhanden sein.

Ein weiterer Gegenstand der Erfindung ist die Verwendung der Verbindungen als Schaumstabilisatoren in Formulierungen zur Herstellung von Polyurethan- oder Polyisocyanurat-Hartschaumstoffen.

Ein weiterer Gegenstand der Erfindung sind schäumbare Formulierungen zur Herstellung von Polyurethan- oder Polyisocyanurat-Hartschaumstoffen durch Umsetzung eines Isocyanates mit einem Polyol in Gegenwart von Schaumstabilisatoren, Urethan- und/oder Isocyanurat-Katalysatoren, Wasser, phosphorhaltigen Flammschutzmitteln, optional weiteren Treibmitteln und optional weiteren Additiven, welche dadurch gekennzeichnet sind, dass als Schaumstabilisatoren ein oder mehrere Verbindungen der allgemeinen Formel (I) verwendet werden.

Ein weiterer Gegenstand der Erfindung ist die Verwendung der schäumbaren Formulierungen zur Herstellung von flammgeschützten Polyurethan- oder Polyisocyanurat-Hartschaumstoffen.

Ein weiterer Gegenstand der Erfindung ist die Verwendung der schäumbaren Formulierungen zur Herstellung von flammgeschützten Polyurethan- oder Polyisocyanurat-Hartschaumstoff-Verbundwerkstoffen.

Vergleicht man die erfindungsgemäßen Schaumstabilisatoren mit analogen Polyethersiloxanen ohne α,ω-Substitution (gleiche Länge der Siloxankette, gleiche Anzahl an Polyethersubstituenten und gleicher Typ der Polyether, aber die Polyethersubstituenten ausschließlich an Siliciumatomen im Inneren der Siloxankette), so zeigen die erfindungsgemäßen Stabilisatoren anwendungstechnische Vorteile hinsichtlich Wärmeleitfähigkeit und Oberflächenbeschaffenheit der unter ihrer Anwendung erhaltenen Hartschaumstoffe.

Weiterhin wird durch die erfindungsgemäßen Polyethersiloxane die Systemlöslichkeit (= Löslichkeit von Polyolformulierung, Katalysatoren, dem Polyethersiloxan und dem Treibmittel), im Vergleich mit analogen Polyethersiloxanen ohne α,ω-Substitution, verbessert.

Durch Einsatz der α,ω-Substitution lassen sich Schaumstabilisatoren für flammgeschützte Hartschaumstoffe realisieren, welche gegenüber dem Stand der Technik eine bessere Kombination der Eigenschaften hinsichtlich Brandverhalten und Zellstabilisierung bieten, d.h. die nicht entweder nur gutes Brandverhalten oder nur eine hohe Aktivität zeigen, sondern beide Eigenschaften miteinander verbinden.

Die erfindungsgemäßen Stabilisatoren sind in den üblichen Formulierungen zur Herstellung von Polyurethan- bzw. Polyisocyanurat-Hartschaumstoffen, bestehend aus einem oder mehreren organischen Isocyanaten mit zwei oder mehr Isocyanat-Funktionen, einem oder mehreren Polyolen mit zwei oder mehr gegenüber Isocyanat reaktiven Gruppen, Katalysatoren für die Reaktionen Isocyanat-Polyol und/oder Isocyanat-Wasser und/oder die Isocyanat-Trimerisierung, Polyethersiloxan-Schaumstabilisatoren mit einer im folgenden näher spezifizierten Struktur, Wasser, optional physikalischen Treibmitteln, optional Flammschutzmitteln und gegebenenfalls weiteren Additiven, einsetzbar.

Geeignete Isocyanate im Sinne dieser Erfindung sind alle mehrfunktionalen organischen Isocyanate, wie beispielsweise 4,4'-Diphenylmethandiisocyanat (MDI), Toluoldiisocyanat (TDI), Hexamethylendiisocyanat (HMDI) und Isophorondiisocyanat (IPDI). Besonders geeignet ist das als "polymeres MDI" ("crude MDI") bekannte Gemisch aus MDI und höher kondensierten Analogen mit einer mittleren Funktionalität von 2 bis 4.

Geeignete Polyole im Sinne dieser Erfindung sind alle organischen Substanzen mit mehreren gegenüber Isocyanaten reaktiven Gruppen sowie deren Zubereitungen. Bevorzugte Polyole sind alle zur Herstellung von Hartschaumstoffen üblicherweise verwendeten Polyetherpolyole und Polyesterpolyole. Polyetherpolyole werden durch Umsetzung von mehrwertigen Alkoholen oder Aminen mit Alkylenoxiden gewonnen. Polyesterpolyole basieren auf Estern mehrwertiger Carbonsäuren (meist Phthalsäure oder Terephthalsäure) mit mehrwertigen Alkoholen (meist Glycolen).

Ein geeignetes Verhältnis von Isocyanat und Polyol, ausgedückt als Index der Formulierung, liegt im Bereich von 80 bis 500, bevorzugt 100 bis 350.

Geeignete Katalysatoren im Sinne dieser Erfindung sind Substanzen, die die Gelreaktion (Isocyanat-Polyol), die Treibreaktion (Isocyanat-Wasser) oder die Di- bzw. Trimerisierung des Isocyanats katalysieren. Typische Beispiele sind die Amine Triethylamin, Dimethylcyclohexylamin, Tetramethylethylendiamin, Tetramethylhexandiamin, Pentamethyldiethylentriamin, Pentamethyldipropylentriamin, Triethylendiamin, Dimethylpiperazin, 1,2-Dimethylimidazol, N-Ethylmorpholin, Tris(dimethylaminopropyl)hexahydro-1,3,5-triazin, Dimethylaminoethanol, Dimethylaminoethoxyethanol und Bis(dimethylaminoethyl)ether, Zinnverbindungen wie Dibutylzinndilaurat und Kaliumsalze wie Kaliumacetat und Kalium-2-ethylhexanoat.

Geeignete Einsatzmengen richten sich nach dem Typ des Katalysators und liegen üblicherweise im Bereich von 0.05 bis 5 pphp (= Gewichtsteilen bezogen auf 100 Gewichtsteile Polyol) bzw. 0.1 bis 10 pphp für Kaliumsalze.

Die erfindungsgemäß verwendeten Polyethersiloxan-Schaumstabilisatoren der allgemeinen Formel (I)

R-Si(CH₃)₂-O- [-Si (CH₃) ₂-O-] ₙ- [-Si(CH₃) R¹-O-] ₘ-Si(CH₃) ₂-R²

R, R¹, R² gleich oder verschieden = - (CH₂)ₓ-O- (CH₂-CHR'-O) _{y}-R"
sind Copolymere, die herstellungsbedingt polydisperse Verbindungen sind, so dass hinsichtlich der Parameter n, m, x und y nur Mittelwerte angegeben werden können.

Die erfindungsgemäßen Polyethersiloxane zeichnen sich aus durch eine mittlere Siloxan-Kettenlänge von n+m+2 = 10 bis 45, bevorzugt 10 bis 40, eine Anzahl an innenständigen Polyethersubstituenten von m = 0 bis 2, und Polyether-Substituenten, die aus einem "Linker" in Form von x = 3 bis 10 Methylengruppen (vorzugsweise 3) und einer Anzahl von y = 1 bis 19, bevorzugt 5 bis 19, Alkylenoxid-Einheiten bestehen.

Bei diesen Alkylenoxid-Einheiten handelt es sich um Ethylenoxid, optional Propylenoxid, optional Butylenoxid und optional Styroloxid in beliebiger Sequenz, wobei der Stoffmengenanteil an Ethylenoxid vorzugsweise mindestens 50 %, besonders bevorzugt mindestens 90 %, beträgt. Die Endgruppe der Polyether ist entweder eine freie OH-Gruppe, eine Alkylether-Gruppe (vorzugsweise Methyl) oder ein Ester, entstanden durch Veresterung der OH-Gruppe mit einer beliebigen Carbonsäure (vorzugsweise Essigsäure). Besonders bevorzugt sind Polyether mit freier OH-Funktion.

Die Polyether in einem Molekül können untereinander gleich oder verschieden sein, sofern alle Komponenten der Polyethermischung die obige Definition erfüllen. Ferner sind auch Mischungen verschiedener Polyethersiloxane eingeschlossen, sofern entweder die Mittelwerte der Mischung in die o.g. Bereiche fallen oder eine Komponente der obigen Definition entspricht.

Geeignete Einsatzmengen an Polyethersiloxan-Schaumstabilisatoren liegen bei 0.5 bis 5 pphp, bevorzugt bei 1 bis 3 pphp.

Geeignete Wasser-Gehalte im Sinne dieser Erfindung hängen davon ab, ob zusätzlich zum Wasser noch physikalische Treibmittel eingesetzt werden oder nicht. Bei rein Wasser getriebenen Schäumen liegen die Werte typischerweise bei 1 bis 20 pphp, werden zusätzlich andere Treibmittel eingesetzt, verringert sich die Einsatzmenge auf üblicherweise 0.1 bis 5 pphp.

Geeignete physikalische Treibmittel im Sinne dieser Erfindung sind Gase, beispielsweise verflüssigtes CO₂, und leichtflüchtige Flüssigkeiten, beispielsweise Kohlenwasserstoffe mit 4 bis 5 Kohlenstoff-Atomen, bevorzugt cyclo-, iso- und n-Pentan, Fluorkohlenwasserstoffe, bevorzugt HFC 245fa, HFC 134a und HFC 365mfc, Fluorchlorkohlenwasserstoffe, bevorzugt HCFC 141b, Sauerstoff-haltige Verbindungen wie Methylformiat und Dimethoxymethan, oder Chlorkohlenwasserstoffe, bevorzugt 1,2-Dichlorethan.

Neben Wasser und gegebenenfalls physikalischen Treibmitteln können auch andere chemische Treibmittel eingesetzt werden, die mit Isocyanaten unter Gasentwicklung reagieren, wie beispielsweise Ameisensäure.

Geeignete Flammschutzmittel im Sinne dieser Erfindung sind bevorzugt flüssige organische Phosphor-Verbindungen, wie halogenfreie organische Phosphate, z.B. Triethylphosphat (TEP), halogenierte Phosphate, z.B. Tris(1-chlor-2-propyl)phosphat (TCPP) und Tris(2-chlorethyl)phosphat (TCEP) und organische Phosphonate, z.B. Dimethylmethanphosphonat (DMMP), Dimethylpropanphosphonat (DMPP), oder Feststoffe wie Ammoniumpolyphosphat (APP) und roter Phosphor. Des Weiteren sind als Flammschutzmittel halogenierte Verbindungen, beispielsweise halogenierte Polyole, sowie Feststoffe, wie Blähgraphit und Melamin, geeignet.

Eine typische Polyurethan- bzw. Polyisocyanurat-Hartschaumformulierung im Sinne dieser Erfindung würde ein Raumgewicht von 20 bis 50 kg/m³ ergeben und hätte die folgende Zusammensetzung:

**Tabelle 1**

| Komponente | Gewichtsanteil |
|---|---|
| Polyol | 100 |
| Amin-Katalysator | 0.05 bis 5 |
| Kalium-Trimerisierungskatalysator | 0 bis 10 |
| Polyethersiloxan | 0.5 bis 5 |
| Wasser | 0,1 bis 20 |
| Treibmittel | 0 bis 40 |
| Flammschutzmittel | 0 bis 50 |
| | |
| Isocyanat-Index: 80 bis 500 | |

Die Verarbeitung der erfindungsgemäßen Formulierungen zu Hartschaumstoffen kann nach allen dem Fachmann geläufigen Verfahren erfolgen, beispielsweise im Handmischverfahren oder bevorzugt mit Hilfe von Hochdruck-Verschäumungsmaschinen. Im Falle von Metallverbundelementen kann die Produktion sowohl diskontinuierlich als auch kontinuierlich im sogenannten Doppelband-Verfahren erfolgen.

Das übliche Verfahren zu Herstellung der erfindungsgemäßen Polyethersiloxan-Schaumstabilisatoren besteht in der Übergangsmetall-katalysierten Hydrosilylierung der olefinisch ungesättigten Polyether mit SiH-funktionellen Siloxanen und ist bekannter Stand der Technik.

### Beispiel: Polyethersiloxan I (PES I)

In einem 500-ml-Vierhalskolben mit angeschlossenem KPG-Rührer, Rückflusskühler und Innenthermometer werden 243,4 g eines Allylpolyoxyalkylenols mit einem mittleren Molekulargewicht von 644 g/mol und einem Propylenoxidanteil von 8 % mit 100 g eines α,ω-Dimethylhydrogen-poly(methylhydrogen)-dimethylsiloxan-Copolymeren mit einem Wasserstoffanteil von 2.7 val/kg unter Rühren auf 70°C erhitzt. 5 ppm eines Platin-Katalysators (Karstedt-Katalysator) werden zugegeben. Der gasvolumetrisch bestimmte Umsatz ist nach zwei Stunden quantitativ.

### Beispiel: PES II

In einem 500-ml-Vierhalskolben mit angeschlossenem KPG-Rührer, Rückflusskühler und Innenthermometer werden 198,4 g eines Allylpolyoxyalkylenols mit einem mittleren Molekulargewicht von 644 g/mol und einem Propylenoxidanteil von 8 % mit 100 g eines α,ω-Dimethylhydrogen-poly(methylhydrogen)-dimethylsiloxan-Copolymeren mit einem Wasserstoffanteil von 2.2 val/kg unter Rühren auf 70°C erhitzt. 5 ppm eines Platin-Katalysators (Karstedt-Katalysator) werden zugegeben. Der gasvolumetrisch bestimmte Umsatz ist nach zwei Stunden quantitativ.

### Beispiel: PES III

In einem 500-ml-Vierhalskolben mit angeschlossenem KPG-Rührer, Rückflusskühler und Innenthermometer werden 148,5 g eines Allylpolyoxyalkylenols mit einem mittleren Molekulargewicht von 663 g/mol und einem Propylenoxidanteil von 18 % mit 100 g eines α,ω-Dimethylhydrogen-poly(methylhydrogen)-dimethylsiloxan-Copolymeren mit einem Wasserstoffanteil von 1.6 val/kg unter Rühren auf 70°C erhitzt. 5 ppm eines Platin-Katalysators (Karstedt-Katalysator) werden zugegeben. Der gasvolumetrisch bestimmte Umsatz ist nach zwei Stunden quantitativ.

### Vergleichsbeispiel (nicht erfindungsgemäß): PES IV

In einem 500-ml-Vierhalskolben mit angeschlossenem KPG-Rührer, Rückflusskühler und Innenthermometer werden 148,5 g eines Allylpolyoxyalkylenols mit einem mittleren Molekulargewicht von 663 g/mol und einem Propylenoxidanteil von 18 % mit 100 g eines Poly(methylhydrogen)dimethylsiloxan-Copolymeren mit einem Wasserstoffanteil von 1.6 val/kg unter Rühren auf 70°C erhitzt. 5 ppm eines Platin-Katalysators (Karstedt-Katalysator) werden zugegeben. Der gasvolumetrisch bestimmte Umsatz ist nach zwei Stunden quantitativ.

Die anwendungstechnischen Vorteile gegenüber dem Stand der Technik, die der Einsatz der erfindungsgemäßen Schaumstabilisatoren in Hartschaum Formulierungen ermöglicht, werden im folgenden anhand von Anwendungsbeispielen aufgezeigt.

### Anwendungsbeispiele

Die Durchführung der Vergleichsverschäumungen erfolgte im Handmischverfahren. Dazu wurden Polyol, Flammschutzmittel, Katalysatoren, Wasser, konventioneller bzw. erfindungsgemäßer Schaumstabilisator und Treibmittel in einen Becher eingewogen und mit einem Tellerrührer (6 cm Durchmesser) 30 s bei 1000 Upm vermischt. Durch erneutes Abwiegen wurde die beim Mischvorgang verdunstete Treibmittelmenge bestimmt und wieder ergänzt. Jetzt wurde das MDI zugegeben, die Reaktionsmischung mit dem beschriebenen Rührer 5 s bei 3000 Upm verrührt und sofort in eine auf 50 °C thermostatisierte Aluminiumform von 50 cm x 25 cm x 5 cm Größe überführt, welche mit Polyethylenfolie ausgekleidet war. Die Einsatzmenge an Schaumformulierung war dabei so bemessen, dass sie um 10 % über der zur Mindestbefüllung der Form notwendigen Menge lag.

Einen Tag nach der Verschäumung wurden die Schaumstoffe analysiert. Oberfläche und Innenstörungen wurden subjektiv anhand einer Skala von 1 bis 10 beurteilt, wobei 10 einen ungestörten Schaum und 1 einen extrem stark gestörten Schaum repräsentiert. Die Porenstruktur (mittlere Zahl der Zellen pro 1 cm) wurde auf einer Schnittfläche optisch durch Vergleich mit Vergleichsschäumen beurteilt. Die Wärmeleitzahl wurde an 2.5 cm dicken Scheiben mit einem Gerät vom Typ Hesto λ Control bei Temperaturen an Probenunter- und -oberseite von 10 °C und 36 °C gemessen. Der prozentuale Volumenanteil an geschlossenen Zellen wurde mit einem Gerät vom Typ AccuPyc 1330 der Firma Micromeritics bestimmt. Die Stauchhärten der Schaumstoffe wurden an würfelförmigen Probekörpern mit 5 cm Kantenlänge nach DIN 53421 bis zu einer Stauchung von 10 % gemessen (angegeben ist die in diesem Messbereich maximal aufgetretene Druckspannung). Es wurden jeweils mehrere Probekörper in Steigrichtung des Schaums belastet. Das Brandverhalten der Schaumstoffe wurde in Anlehnung an DIN 4102 in einem entsprechenden Kleinbrenner-Test untersucht. Angegeben ist jeweils die maximale Flammhöhe, die innerhalb von 15 s Beflammung beobachtet wurde, gemittelt über mehrere Probekörper.

Alle verwendeten Schaumstabilisatoren sind in den Tabellen 2a und 2b zusammengestellt.

**Tabelle 2a: erfindungsgemäße Stabilisatoren**

| | |
|---|---|
| | |

| Struktur : | |
|---|---|
| R-Si (CH₃) ₂-O- [-Si(CH₃) ₂-O-] ₙ- [-Si(CH₃) R-O-] ₘ-Si (CH₃) ₂-R R = - -(CH₂)₃-O- (CH₂-CHR'-O) _{y}-H | |

| Bezeichnung | Strukturparameter |
|---|---|
| PES I | n=16, m=2, y=13, R'=H (92%), CH₃ (8%) |
| PES II | n=21, m=2, y=13, R'=H (92%), CH₃ (8%) |
| PES III | n=22, m=1, y=13, R'=H (82%), CH₃ (18%) |

**Tabelle 2b: nicht erfindungsgemäße Stabilisatoren (Vergleichsbeispiele)**

| | |
|---|---|
| | |

| Struktur: | |
|---|---|
| Si(CH₃)₃-O-[-Si(CH₃)₂-O-]ₙ-[-Si(CH₃)R-O-]ₘ-Si(CH₃)₃ R = -(CH₂)₃-O-(CH₂-CHR'-O)y-H | |

| Bezeichnung | Strukturparameter |
|---|---|
| PES IV | n=20, m=3, y=13, R'=H (82%), CH₃ (18%) |
| Tegostab^{®} B 8450 * | |
| Tegostab^{®} B 8462 | |
| Tegostab^{®} B 8474 | |
| Tegostab^{®} B 8486 | |
| Tegostab^{®} B 8512 | |
| Tegostab^{®} B 8513 | |
| Tegostab^{®} B 8522 | |
| Tegostab^{®} B 8871 | |
| DC 193 von Air Products | |

| | |
|---|---|
| * Tegostab ist eine Marke der Goldschmidt GmbH | |

### 1. PUR-Hartschaumsysteme der Brandklasse B2 für Metallverbundelemente

Es wurden drei verschiedene, für dieses Einsatzgebiet abgestimmte Formulierungen verwendet (siehe Tabelle 3).

**Tabelle 3: Formulierungen zu Beispiel 1**

| | | | |
|---|---|---|---|
| | | | |

| Komponente | Formulierung A | Formulierung B | Formulierung C |
|---|---|---|---|
| Polyetherpolyol | Blend A | Blend B | Blend C |
| | 75 Teile | 85 Teile | 70 Teile |
| DMPP | 25 Teile | | |
| TCPP | | 15 Teile | 30 Teile |
| PMDETA | 0.2 Teile | --- | 0.2 Teile |
| DMCHA | 1.5 Teile | 2.0 Teile | 2.0 Teile |
| Wasser | 0.7 Teile | 2.5 Teile | 1.0 Teile |
| n-Pentan | 7.0 Teile | --- | 6.0 Teile |
| Stabilisator | 2.0 Teile | 2.0 Teile | 2.0 Teile |
| | | | |
| MDI* | 150 Teile | 180 Teile | 140 Teile |

| | | | |
|---|---|---|---|
| * polymeres MDI, 200 mPa*s, 31.5% NCO, Funktionalität 2.7 | | | |

Die Ergebnisse sind in Tabelle 4 zusammengestellt.

**Tabelle 4: Ergebnisse zu Beispiel 1**

| Stabilisator | Defekte oben/unten/ innen | Zellen/ cm | λ-Wert [mW/m*K] | Geschlossenzelligkeit [%] | Stauchhärte [kPa] | Dichte [kg/m³] gesamt/ Kern | Flammhöhe (DIN 4102) [mm] |
|---|---|---|---|---|---|---|---|
| Formulierung A | | | | | | | |
| B 8512 | 7/9/9 9 | 36-40 | 23.3 | 94.1 | 150 | 42.0 / 37.5 | 180 |
| B 8522 | 5/9/7 7 | 36-40 | 23.4 | 94.0 | 170 | 42.5 / 37.6 | 175 |
| B 8450 | 6/8/7 7 | 32-36 | 23.9 | 95.0 | 175 | 42.6 / 37.4 | 135 |
| B 8486 | 6/9/8 8 | 36-40 | 23.7 | 95.1 | 190 | 41.9 / 37.7 | 135 |
| DC 193 | 6/9/8 8 | 36-40 | 23.8 | 94.7 | 190 | 42.2 / 37.1 | 135 |
| PES I | 7/9/8 8 | 36-40 | 23.5 | 94.0 | 195 | 42.3 / 38.1 | 130 |
| PES II | 7/9/8 8 | 36-40 | 23.4 | 94.7 | 160 | 42.2 / 37.4 | 135 |

| Formulierung B | | | | | | | |
|---|---|---|---|---|---|---|---|
| B 8450 | 7/8/6 | 32-36 | 25.7 | 90.7 | 205 | 42.2 / 37.4 | 120 |
| B 8486 | 6/8/7 | 32-36 | 25.0 | 92.3 | 210 | 42.0 / 37.0 | 115 |
| DC 193 | 6/8/7 | 32-36 | 25.6 | 91.6 | 215 | 42.5 37.4 | 115 |
| PES I | 6/8/7 | 32-36 | 24.9 | 91.0 | 215 | 42.2 / 37.2 | 105 |
| PES II | 7/9/7 | 32-36 | 24.6 | 92.2 | 185 | 42.7 / 37.6 | 105 |

| Formulierung C | | | | | | | |
|---|---|---|---|---|---|---|---|
| B 8450 | 7/8/7 | 36-40 | 23.5 | 91.8 | 185 | 42.8 / 38.3 | 145 |
| B 8486 | 7/9/7 | 40-44 | 22.9 | 92.7 | 170 | 43.2 / 38.9 | 150 |
| DC 193 | 7/9/7 | 40-44 | 23.2 | 91.7 | 175 | 42.9 / 38.1 | 150 |
| PES I | 8/9/7 | 40-44 | 22.7 | 93.4 | 185 | 42.5 / 38.5 | 150 |
| PES II | 8/9/7 | 44-48 | 22.2 | 93.0 | 180 | 42.8 / 38.6 | 150 |

Die Daten von Formulierung A zeigen, dass konventionelle hochaktive Stabilisatoren wie TEGOSTAB B 8512 und TEGOSTAB B 8522 zwar leichte Vorteile in der Wärmeleitfähigkeit bieten, beim Brandtest aber sehr schlecht abscheiden. Mit diesen Stabilisatoren wird eine Einstufung in die Brandklasse B2 nicht erreicht, bzw. würde eine Modifikation der Formulierung unter massiver Erhöhung des Gehaltes an Flammschutzmittel erfordern. Mit den nicht erfindungsgemäßen, hinsichtlich Flammschutz optimierten Stabilisatoren TEGOSTAB B 8450, TEGOSTAB B 8486 und DC 193 und den erfindungsgemäßen Stabilisatoren PES I und PES II erreicht die Formulierung A in allen Fällen die Einstufung in die Brandklasse B2, wobei die erfindungsgemäßen Stabilisatoren die am besten ausgewogene Kombination aus geringer Wärmeleitfähigkeit und guten Ergebnissen beim Brandtest bieten. Noch wesentlich deutlicher werden die Vorteile der erfindungsgemäßen Stabilisatoren in den Formulierungen B und C. Bei gleich guten bis besseren Ergebnissen im Brandtest nach DIN 4102 zeigen die mit erfindungsgemäßen Stabilisatoren hergestellten Schaumstoffe wesentlich bessere Wärmeleitfähigkeiten als mit nicht erfindungsgemäßen, hinsichtlich Flammschutz optimierten Produkten.

Ein großes Problem bei der Herstellung von Metallverbundelementen sind Schaumstörungen in Form von Hohlräumen, die bei der Beschäumung von lackierten Blechen an der unteren Grenzfläche zwischen Blech und Schaumkern entstehen. Diese Defekte können sich auf der Oberfläche der Verbundelemente abzeichnen und geben so Anlass zu Beanstandungen.

Nach allgemein akzeptierter Vorstellung sind Lack-Additive, vor allem Verlaufsadditive und Entlüfter, die Ursache dieser Oberflächendefekte. Diese Lack-Additive diffundieren bei der Beschäumung von der Lackoberfläche in frisch aufgetragene PUR-Formulierung und wirken dort entschäumend, so dass an der Grenzfläche zwischen Lack und PUR-Schaum ein lokaler Schaumkollaps auftreten kann.

Die Sensitivität einer Schaumformulierung gegenüber entschäumenden Kontaminationen hängt von ihrer Zusammensetzung, insbesondere vom Schaumstabilisator, ab. Am einfachsten lässt sich diese Sensitivität vergleichen, indem eine definierte Menge eines Entschäumers in die Formulierung eingerührt wird und die Struktur des damit hergestellten Schaumstoffes beurteilt wird.

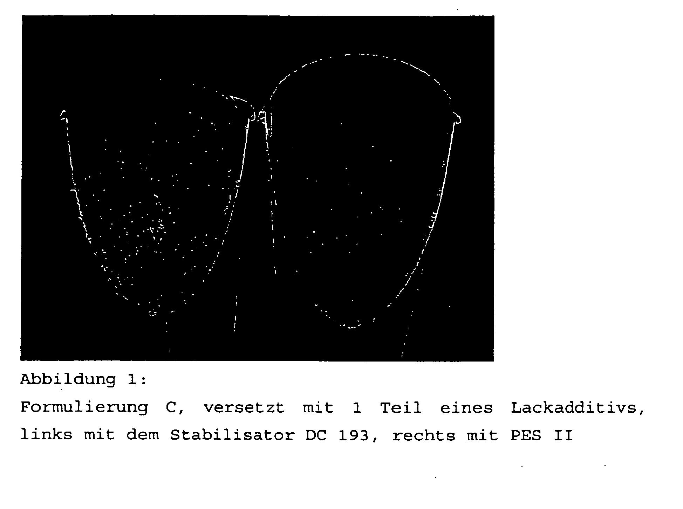

Abbildung 1 zeigt ein solches Experiment, bei dem Formulierung C 1 Teil eines Lack-Verlaufsadditivs zugesetzt wurde und diese Mischung sowohl unter Verwendung des nicht erfindungsgemäßen Stabilisators DC 193 als auch des erfindungsgemäßen Stabilisators PES II verschäumt wurde. Das hohe Stabilisierungspotential der erfindungsgemäßen Struktur zeigt sich in einem ungestörten Schaum, während starke Schaumstörungen eine hohe Sensitivität gegenüber Entschäumern bei Verwendung von DC 193 anzeigen.

### 2. PIR-Hartschaumsystem für kontinuierlich produzierte Dämmplatten

Es wurden zwei verschiedene, für dieses Einsatzgebiet abgestimmte Formulierungen verwendet (siehe Tabelle 5), die mit vier nicht erfindungsgemäßen und einem erfindungsgemäßen Schaumstabilisator verschäumt wurden.

**Tabelle 5: Formulierungen zu Beispiel 2**

| | | |
|---|---|---|
| | | |

| Komponente | Formulierung D | Formulierung E |
|---|---|---|
| Polyol | Stepan PS 2352 | Invista Terate 3522 |
| | 100 Teile | 100 Teile |
| TCPP | 15 Teile | 10 Teile |
| PMDETA | 0.2 Teile | 0.2 Teile |
| Kaliumoctoat (75% in DEG) | 4.0 Teile | 4.0 Teile |
| Wasser | 0.4 Teile | 0.4 Teile |
| n-Pentan | 20 Teile | 20 Teile |
| Stabilisator | 2.0 Teile | 2.0 Teile |
| | | |
| MDI* | 200 Teile | 195 Teile |

| | | |
|---|---|---|
| * polymeres MDI, 200 mPa*s, 31.5% NCO, Funktionalität 2.7 | | |

Die Ergebnisse sind in Tabelle 6 zusammengestellt.

**Tabelle 6: Ergebnisse zu Beispiel 2**

| Stabilisator | Defekte oben/unten/innen | Zellen/ cm | λ-wert [mW/m*K] | Geschlossenzelligkeit [%] | Stauchhärte [kPa] | Dichte [kg/m³] gesamt/Kern | Flammhöhe (DIN 4102) [mm] |
|---|---|---|---|---|---|---|---|
| Formulierung D | | | | | | | |
| B 8512 | 6 / 7 / 8 | 44-48 | 22.6 | 93.7 | 175 | 38.2 / 34.8 | 155 |
| B 8513 | 5 / 7 / 8 | 44-48 | 22.5 | 96.5 | 140 | 38.6 / 35.0 | 175 |
| B 8522 | 6 / 7 / 9 | 44-48 | 22.8 | 94.5 | 165 | 38.8 / 34.8 | 155 |
| B 8871 | 6 / 8 / 9 | 44-48 | 22.6 | 94.0 | 165 | 38.5 / 35.1 | 160 |
| PES II | 6 / 8 / 9 | 44-48 | 22.6 | 92.9 | 165 | 38.5 / 35.2 | 145 |

| Formulierung E | | | | | | | |
|---|---|---|---|---|---|---|---|
| B 8512 | 5 / 5 / 6 | 44-48 | 23.0 | 93.4 | 135 | 36.7 / 33.4 | 170 |
| B 8513 | 5 / 6 / 5 | 36-40 | 23.7 | 91.0 | 145 | 37.2 / 33.5 | 190 |
| B 8522 | 5 / 5 / 6 | 40-44 | 23.7 | 93.6 | 170 | 37.5 / 33.4 | 165 |
| B 8871 | 5 / 5 / 6 | 40-44 | 23.1 | 94.3 | 165 | 37.0 / 32.7 | 170 |
| PES II | 6 / 5 / 7 | 44-48 | 23.0 | 94.0 | 180 | 37.0 / 33.2 | 145 |

Die Daten zeigen, dass der erfindungsgemäße Schaumstabilisator PES II die am besten ausgewogene Kombination aus geringer Wärmeleitfähigkeit und guten Ergebnissen beim Brandtest bietet.

### 3. PUR-Hartschaumsystem für Isolation von Kühlmöbeln

Es wurde eine für dieses Einsatzgebiet abgestimmte Formulierung verwendet (siehe Tabelle 7), die mit drei nicht erfindungsgemäßen und einem erfindungsgemäßen Schaumstabilisator verschäumt wurde. Abweichend von der bisherigen Durchführung wurde diesmal eine Hochdruck-Verschäumungsmaschine von Cannon mit einen Mischkopf vom Typ FPL-HP 14 verwendet (Mischkammerdruck 138 bar, Durchsatz 20 kg/min), mit der die Formulierung in eine auf 45 °C thermostatisierte Aluminiumform von 200 cm x 20 cm x 5 cm Größe eingetragen wurde. Die Einsatzmenge an Schaumformulierung war dabei so bemessen, dass sie um 10 % über der zur Mindestbefüllung der Form notwendigen Menge lag.

**Tabelle 7: Formulierung zu Beispiel 3**

| | |
|---|---|
| Komponente | Formulierung F |
| Polyol-Blend | 100 Teile |
| DMCHA | 3.0 Teile |
| Wasser | 1.5 Teile |
| HFC 245fa | 33 Teile |
| Stabilisator | 2.5 Teile |
| | |
| MDI* | 140 Teile |

| | |
|---|---|
| * polymeres MDI, 200 mPa*s, 31.5% NCO, Funktionalität 2.7 | |

Die in Tabelle 8 dargestellten Ergebnisse beweisen, dass die erfindungsgemäßen Schaumstabilisatoren nicht nur für flammgeschützte Hartschaumstoffe anwendbar sind, sondern auch bei nicht flammgeschützten Systemen für die Anwendung als Isolationsmaterial in Kühlmöbeln Vorteile bieten können.

**Tabelle 8: Ergebnisse zu Beispiel 3**

| | | | |
|---|---|---|---|
| Stabilisator | Dichte bei Mindestbefüllung [kg/m³] | Defekte oben/unten/ innen | λ-Wert [mW/m*K] |
| Formulierung F | | | |
| B 8462 | 29.3 | 7 / 6 / 7 | 19.9 |
| B 8474 | 30.4 | 7 / 7 / 7 | 19.3 |
| PES III | 29.3 | 7 / 6 / 7 | 19.0 |
| PES IV | 29.6 | 6 / 6 / 6 | 20.4 |

## Patentansprüche

1. Verfahren zur Herstellung von Polyurethan- oder Polyisocyanurat-Hartschaumstoffen durch Umsetzung eines Isocyanates mit einem Polyol in Gegenwart von Schaumstabilisatoren, Urethan- und/oder Isocyanurat-Katalysatoren, Wasser, optional weiteren Treibmitteln, optional Flammschutzmitteln und optional weiteren Additiven, **dadurch gekennzeichnet, dass** als Schaumstabilisatoren eine oder mehrere Verbindungen der allgemeinen Formel (I)
R-Si(CH₃)₂-O-[-Si(CH₃)₂-O-]ₙ-[-Si(CH₃)R¹-O-]ₘ-Si(CH₃)₂-R²
verwendet werden, worin die Substituenten und Indices die folgende Bedeutung haben
R, R¹, R² gleich oder verschieden = - (CH₂)ₓ-O-(CH₂-CHR'-O)_{y}-R"
R' = H, -CH₃, -CH₂CH₃, Phenyl-Reste,
R" = H, Alkyl-, Acyl-Reste,
n+m+2 = 10 bis 45,
m = 0 bis 2,
x = 3 bis 10,
y = 1 bis 19.

2. Verfahren zur Herstellung von Polyurethan- oder Polyisocyanurat-Hartschaumstoffen gemäß Anspruch 1, **dadurch gekennzeichnet, dass** mind. 50 % der R'= H sind.

3. Verfahren zur Herstellung von Polyurethan- oder Polyisocyanurat-Hartschaumstoffen gemäß Anspruch 1 und/oder 2, **dadurch gekennzeichnet, dass** R" = H ist.

4. Verfahren zur Herstellung von Polyurethan- oder Polyisocyanurat-Hartschaumstoffen gemäß mindestens einem der Ansprüche 1 bis 3, **dadurch gekennzeichnet, dass** n+m+2 = 10 bis 40 sind.

5. Verfahren zur Herstellung von Polyurethan- oder Polyisocyanurat-Hartschaumstoffen gemäß mindestens einem der Ansprüche 1 bis 4, **dadurch gekennzeichnet, dass** x = 3 und y = 5 bis 19 ist.

6. Verwendung der Verbindungen gemäß mindestens einem der Ansprüche 1 bis 5 als Schaumstabilisatoren in Formulierungen zur Herstellung von Polyurethan- oder Polyisocyanurat-Hartschaumstoffen.

7. Schäumbare Formulierung zur Herstellung von Polyurethan- oder Polyisocyanurat-Hartschaumstoffen durch Umsetzung eines Isocyanates mit einem Polyol in Gegenwart von Schaumstabilisatoren, Urethan- und/oder Isocyanurat-Katalysatoren, Wasser, optional Phosphorhaltigen Flammschutzmitteln, optional weiteren Treibmitteln und optional weiteren Additiven, **dadurch gekennzeichnet, dass** als Schaumstabilisatoren ein oder mehrere Verbindungen der allgemeinen Formel (I) verwendet werden.

8. Verwendung der schäumbaren Formulierungen gemäß Anspruch 7 zur Herstellung von flammgeschützten Polyurethan- oder Polyisocyanurat-Hartschaumstoffen.

9. Verwendung der schäumbaren Formulierungen gemäß Anspruch 7 zur Herstellung von flammgeschützten Polyurethan- oder Polyisocyanurat-Hartschaumstoff-Verbundwerkstoffen.

## Claims

1. Process for producing rigid polyurethane or polyisocyanurate foams by reacting an isocyanate with a polyol in the presence of foam stabilizers, urethane and/or isocyanurate catalysts, water, optionally further blowing agents, optionally flame retardants and optionally further additives, **characterized in that** one or more compounds of the general formula (I)
R-Si(CH₃)₂-O-[-Si(CH₃)₂-O-]ₙ-[-Si(CH₃)R¹-O-]ₘ-Si(CH₃)₂-R² where the substituents and indices have the following meanings:
R, R¹, R² are identical or different and are each
-(CH₂)ₓ-O-(CH₂-CHR'-O)_{y}-R",
R' = H, -CH₃, -CH₂CH₃, phenyl,
R", = H, alkyl, acyl,
n+m+2 = 10 to 45,
m = 0 to 2,
x = 3 to 10,
y = 1 to 19,
are used as foam stabilizers.

2. Process for producing rigid polyurethane or polyisocyanurate foams according to Claim 1, **characterized in that** at least 50% of the radicals R' are H.

3. Process for producing rigid polyurethane or polyisocyanurate foams according to Claim 1 and/or 2, **characterized in that** R" = H.

4. Process for producing rigid polyurethane or polyisocyanurate foams according to at least one of Claims 1 to 3, **characterized in that** n+m+2 = 10 to 40.

5. Process for producing rigid polyurethane or polyisocyanurate foams according to at least one of Claims 1 to 4, **characterized in that** x = 3 and y = 5 to 19.

6. Use of the compounds according to at least one of Claims 1 to 5 as foam stabilizers in formulations for producing rigid polyurethane or polyisocyanurate foams.

7. Foamable formulation for producing rigid polyurethane or polyisocyanurate foams by reacting an isocyanate with a polyol in the presence of foam stabilizers, urethane and/or isocyanurate catalysts, water, optionally phosphorus-containing flame retardants, optionally further blowing agents and optionally further additives, **characterized in that** one or more compounds of the general formula (I) are used as foam stabilizers.

8. Use of the foamable formulations according to Claim 7 for producing flame-resistant rigid polyurethane or polyisocyanurate foams.

9. Use of the foamable formulations according to Claim 7 for producing flame-resistant rigid polyurethane or polyisocyanurate foam composites.

## Revendications

1. Procédé pour la production de mousses rigides de polyuréthane ou polyisocyanurate par mise en réaction d'un isocyanate avec un polyol en présence de stabilisants de mousse, de catalyseurs d'uréthanes et/ou d'isocyanurates, d'eau, en option d'autres agents d'expansion, en option d'agents ignifuges et en option d'autres additifs, **caractérisé en ce qu'**on utilise comme stabilisants de mousses un ou plusieurs composés de formule générale (I)
R-Si(CH₃)₂-O-[-Si(CH₃)₂-O-]ₙ-[-Si(CH₃)R¹-O-]ₘ-Si(CH₃)₂-R² dans laquelle les substituants et indices ont les significations suivantes
R, R¹, R² sont identiques ou différents et représentent -(CH₂)ₓ-O-(CH₂-CHR'-O)_{y}-R"
R' = H, -CH₃, -CH₂CH₃, des radicaux phényle,
R" = H, des radicaux alkyle, acyle,
n+m+2 = 10 à 45,
m = 0 à 2,
x = 3 à 10,
y = 1 à 19.

2. Procédé pour la production de mousses rigides de polyuréthane ou polyisocyanurate selon la revendication 1, **caractérisé en ce qu'**au moins 50 % des radicaux R' sont = H.

3. Procédé pour la production de mousses rigides de polyuréthane ou polyisocyanurate selon la revendication 1 et/ou la revendication 2, **caractérisé en ce que** R" est = H.

4. Procédé pour la production de mousses rigides de polyuréthane ou polyisocyanurate selon au moins l'une des revendications 1 à 3, **caractérisé en ce que** n+m+2 sont = 10 à 40.

5. Procédé pour la production de mousses rigides de polyuréthane ou polyisocyanurate selon au moins l'une des revendications 1 à 4, **caractérisé en ce que** x est = 3 et y est = 5 à 19.

6. Utilisation des composés selon au moins l'une des revendications 1 à 5, en tant que stabilisants de mousse dans des compositions pour la production de mousses rigides de polyuréthane ou polyisocyanurate.

7. Composition pouvant être transformée en mousse pour la production de mousses rigides de polyuréthane ou polyisocyanurate par mise en réaction d'un isocyanate avec un polyol en présence de stabilisants de mousse, de catalyseurs d'uréthane et/ou d'isocyanurate, d'eau, en option d'agents ignifuges phosphorés, en option d'autres agents d'expansion et en option d'autres additifs, **caractérisé en ce qu'**on utilise comme stabilisants de mousses un ou plusieurs composés de formule générale (I).

8. Utilisation des compositions pouvant être transformées en mousse selon la revendication 7, pour la production de mousses rigides de polyuréthane ou polyisocyanurate ignifugées.

9. Utilisation des compositions pouvant être transformées en mousse selon la revendication 7, pour la production de matériaux composites à base de mousse rigide de polyuréthane ou polyisocyanurate ignifugés.
